# EUROPEAN PATENT APPLICATION

(11) **EP 3 225 453 A1**
(43) Date of publication of application: **04.10.2017**
(21) Application number: 17161404.3
(22) Date of filing: 16.03.2017
(51) Int. Cl.: B60L 7/14, B60L 7/18, B60L 15/20

(54) **REGENERATION CONTROL APPARATUS**

(30) Priority: 29.03.2016 JP 2016066241
(71) Applicant: MITSUBISHI JIDOSHA KOGYO KABUSHIKI KAISHA, Tokyo 108-8410 (JP)
(72) Inventor: HASHIZAKA, Akira, Minato-ku, Tokyo 108-8410 (JP); MOTAI, Masaaki, Minato-Ku, Tokyo 108-8410 (JP); MITSUOKA, Hidetaka, Minato-Ku, Tokyo 108-8410 (JP); SUZUKI, Toshikatsu, Minato-Ku, Tokyo 108-8410 (JP); MURASE, Masahiro, Minato-Ku, Tokyo 108-8410 (JP)
(74) Representative: Regimbeau

(57) **Abstract**

A regeneration control apparatus which controls a regenerative braking force of an electric motor for driving an electric motor vehicle includes: a regeneration operation unit operated by a driver to select magnitude of the regenerative braking force stepwise from selection stages; a default operation unit operated by the driver to change the magnitude of the regenerative braking force to one of the selection stages which has been set as a default stage; a detection unit detecting an operation state on the regeneration operation unit during a learning period; and a default stage changing unit, when one of the selection stages whose selection frequency is highest during the learning period is different from one of the selection stages which has been currently set as the default stage, changing the default stage to another selection stage.

## Description

### BACKGROUND

The present invention relates to a regeneration control apparatus of an electric motor vehicle.

According to the background art, there have been known electric motor vehicles each of which travels using an electric motor as a traveling power source. The electric motor is driven by electric power which has been charged into a battery.

In this type of electric motor vehicle, the electric motor is regeneratively driven during deceleration to thereby obtain a braking force (regenerative braking force). At the same time, kinetic energy of the vehicle is recovered as electric energy due to regenerative power generation during the deceleration. The regenerative braking force is preferably set high in the viewpoint of energy efficiency in order to obtain a large amount of regeneratively generated power. When the regenerative braking force is increased, the amount of deceleration increases to affect drivability.

To solve this problem, there has been known a technique for providing a regeneration operation unit which can be operated by a driver to desirably set the magnitude of the braking force during regenerative braking.

For example, a regenerative braking control apparatus which is provided with a shift lever and a paddle switch is described in JP-A-2014-128075. The shift lever is operated a predetermined number of times for setting the regenerative braking force of the electric motor at a predetermined regeneration level. The paddle switch is required to be operated a larger number of times than the number of times the shift lever is operated for setting the predetermined regeneration level. In this manner, the regenerative braking can be controlled at the predetermined regeneration level easily by operability corresponding to a travelling state.

As in the aforementioned background-art technique, electric motor vehicles each provided with the operation unit which can be operated by a driver to set the regenerative braking force at a magnitude preferred by the driver have been broadly used. However, most of drivers have determined their favorite regenerative braking forces (regeneration levels) respectively. It is therefore expected that such a user sets the regenerative braking force at the same selection stage every time during deceleration in which regenerative power generation can be expected.

Particularly, it is expected that a user who wants to increase energy efficiency as much as possible by the regenerative braking or a user who prefers to have a large deceleration amount due to a high regenerative braking force selects a selection stage of a relatively small regenerative braking force during travel, and selects a selection stage at which a large regenerative braking force can be obtained during deceleration.

However, the aforementioned regeneration operation unit is generally set to change the selection stage one by one whenever the regeneration operation unit is operated. Therefore, there is a problem that the number of times of operation on the regeneration operation unit becomes larger and troublesome as there is a larger distance between the current selection stage and a desired selection stage.

In addition, the operation time becomes longer as there is a larger distance between the current selection stage and the desired selection stage. Accordingly, there may occur a situation that it is not possible to set the selection stage into a desired one at a timing high in regeneration efficiency (for example, deceleration from high speed). Therefore, user-friendliness is poor.

### SUMMARY

An object of the invention is to provide a regeneration control apparatus which can make it easier to change a regenerative braking force to a level desired by a driver.

In order to achieve the object, according to an aspect of the invention, there is provided a regeneration control apparatus which is configured to control a regenerative braking force of an electric motor which is configured to drive an electric motor vehicle, the regeneration control apparatus comprising: a regeneration operation unit which is adapted to be operated by a driver to select magnitude of the regenerative braking force stepwise from selection stages; a default operation unit which is adapted to be operated by the driver to change the magnitude of the regenerative braking force to one of the selection stages which has been set as a default stage; a detection unit which is configured to detect an operation state on the regeneration operation unit during a learning period; and a default stage changing unit which, when one of the selection stages whose selection frequency is highest during the learning period is different from one of the selection stages which has been currently set as the default stage, is configured to change the default stage to another selection stage.

### BRIEF DESCRIPTION OF THE DRAWINGS

Fig. 1 is a block diagram showing the configuration of a regeneration control apparatus 10 according to an embodiment.
Fig. 2 is a schematic view showing a peripheral configuration of a paddle switch 122.
Fig. 3 is a schematic view showing a peripheral configuration of a shift lever 124 as seen from right above.
Fig. 4 is a conceptual view showing a regenerative braking force which can be set by the paddle switch 122 and the shift lever 124.
Fig. 5 is a flow chart showing processing performed by a default stage changing unit 306.
Fig. 6 is a timing chart showing a specific example of the processing performed by the default stage changing unit 306.
Fig. 7 is a flow chart showing processing performed by a regeneration control unit 304.

### DETAILED DESCRIPTION OF EXEMPLARY EMBODIMENTS

A preferred embodiment of a regeneration control apparatus according to the invention will be described below in detail with reference to the accompanying drawings.

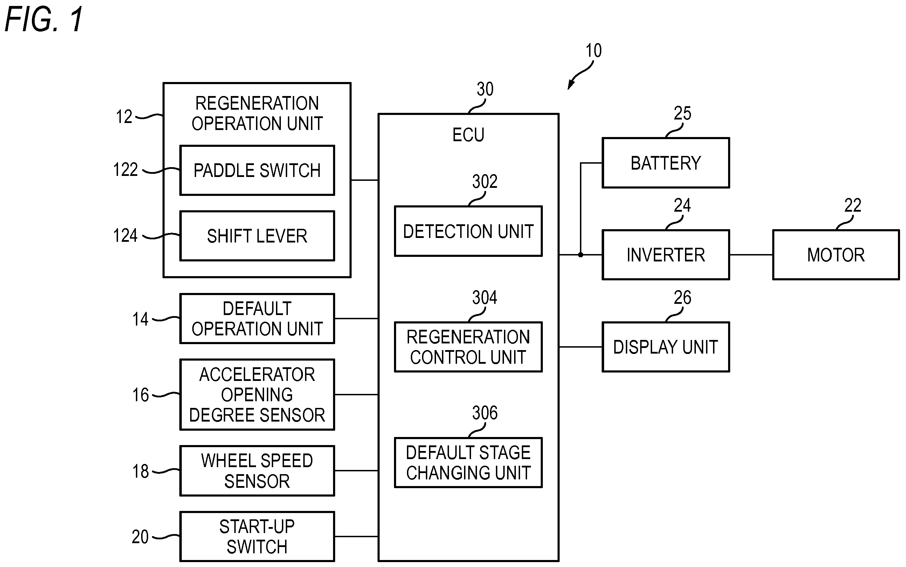

Fig. 1 is a block diagram showing the configuration of a regeneration control apparatus 10 according to the embodiment.

In the embodiment, the regeneration control apparatus 10 is mounted on an electric motor vehicle in which only a motor (electric motor) 22 is mounted as a traveling power source.

Incidentally, the electric motor vehicle mounted with the regeneration control apparatus 10 is not limited to an electrically powered car but may be a hybrid car mounted with the motor 22 and an engine. That is, the electric motor vehicle in Claims may include the electrically powered car and the hybrid car.

The regeneration control apparatus 10 is configured to include a regeneration operation unit 12 (a paddle switch 122 and a shift lever 124), a default operation unit 14, an accelerator opening degree sensor 16, wheel speed sensors 18, a start-up switch 20, a motor 22, an inverter 24, a battery 25, a display unit 26, and an ECU (Electronic Control Unit) 30.

The ECU 30 is a microcomputer which controls the electric motor vehicle as a whole. The microcomputer is configured to include a CPU, an ROM, an RAM, an EEPROM, an interface unit, etc. The ROM stores and saves a control program etc. The RAM serves as a working area of the control program. The EEPROM keeps various data rewritably. The interface unit has an interface with a peripheral circuit etc.

The motor 22 drives driving wheels of the electric motor vehicle by electric power supplied from the battery 25. In addition, the motor 22 can perform power generating operation when the electric motor vehicle is being decelerated. That is, the motor 22 can drive the driving wheels of the electric motor vehicle, and generate electric power regeneratively.

More specifically, when the ECU 30 detects a driver's drive request (stepping-on of an accelerator pedal) through the accelerator opening degree sensor 16, electric power accumulated in the battery 25 is converted into an AC current by the inverter 24 and supplied to the motor 22. The motor 22 is actuated by the AC current supplied from the inverter, so that a drive torque (traveling drive force) for making the electric motor vehicle travel can be outputted to the driving wheels.

In addition, when the driver releases the accelerator pedal, the release of the accelerator pedal is detected by the accelerator opening degree sensor 16. The motor 22 functions as a generator to perform power generating operation. That is, upon reception of a rotational torque from the driving wheels, the motor 22 carries out regenerative power generation, and exerts a load of the power generation as a vehicle braking force (regenerative braking force). The electric power obtained by the regenerative power generation is converted into a DC current by the inverter 24 and charged into the battery 25.

The accelerator opening degree sensor 16 detects an operation state on the not-shown accelerator pedal and outputs the detected operation state as an accelerator opening degree value to the ECU 30.

The wheel speed sensors 18 are provided in wheels of the electric motor vehicle respectively. The wheel speed sensors 18 detect rotational speeds of the respective wheels, and output the detected rotational speeds to the ECU 30. The ECU 30 calculates a traveling speed of the electric motor vehicle by use of the values detected by the respective wheel speed sensors 18.

The start-up switch 20 accepts an operation input for instructing start-up or termination of a main system of the electric motor vehicle.

The display unit 26 is provided in the periphery of an instrument panel of a driver's seat to display various setting states of the electric motor vehicle to the driver visually. In the embodiment, for example, the display unit 26 displays a regeneration level which is currently set, or a regeneration level which is set as a default stage.

The regeneration operation unit 12 can select the magnitude of the regenerative braking force of the motor 22 (electric motor) from selection stages based on a driver's operation.

In the embodiment, the regeneration operation unit 12 is configured to include the paddle switch 122 and the shift lever 124. The paddle switch 122 can adjust a regenerative braking force in an increasing direction and a decreasing direction. The shift lever 124 can adjust the regeneration level of the electric motor vehicle in the increasing direction with reference to default setting.

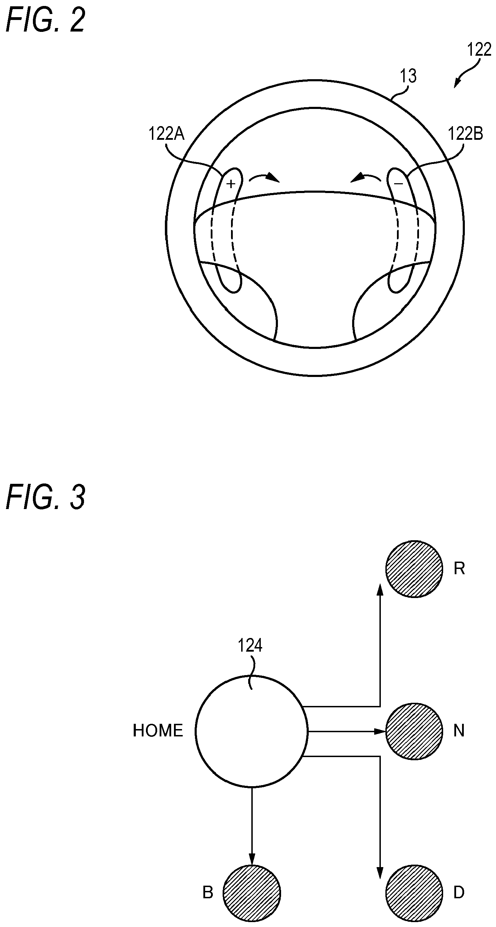

Fig. 2 is a schematic view showing a peripheral configuration of the paddle switch 122 provided in a steering wheel 13.

The paddle switch 122 is provided with a plus switch 122A which can change the regenerative braking force stepwise in the increasing direction, and a minus switch 122B which can change the regenerative braking force stepwise in the decreasing direction. The paddle switch 122 has a configuration in which a driver gripping the steering wheel 13 moves the plus switch 122A or the minus switch 122B toward the driver (toward the rear of a vehicle) so that the driver can operate the paddle switch 122.

After operating the plus switch 122A or the minus switch 122B, the driver releases the operated switch. On this occasion, the operated switch is configured to return to a home position automatically. The regenerative braking force shifts in the increasing direction or the decreasing direction in accordance with the number of times of operation on each of the switches.

Fig. 3 is a schematic view showing a peripheral configuration of the shift lever 124 provided in the driver's seat as seen from right above.

The shift lever 124 is an operation unit which can change a traveling mode in accordance with a driver's operation. The shift lever 124 is provided in the driver's seat of the electric motor vehicle.

The shift lever 124 is set at an illustrated home position as a default state. When the driver changes the shift position of the shift lever 124 to front, rear, left or right in accordance with an arrow, the electric motor vehicle can be changed over to a corresponding traveling mode.

Here, an N position means a neutral mode in which the motive power of the motor 22 is not transmitted to the driving wheels. A D position means a normal traveling mode for performing forward traveling, and an R position means a backward mode for performing backward traveling.

Assume that the D position has been selected to bring the electric motor vehicle into the normal traveling mode. In this case, when the shift lever 124 is operated to a B position, the regenerative braking force of the motor 22 can be shifted stepwise. The shift lever 124 is configured to return to the home position automatically when the driver releases the shift lever 124 after operating the shift lever 124 to the B position. The regenerative braking force shifts in the increasing direction correspondingly to the number of times of operation to the B position.

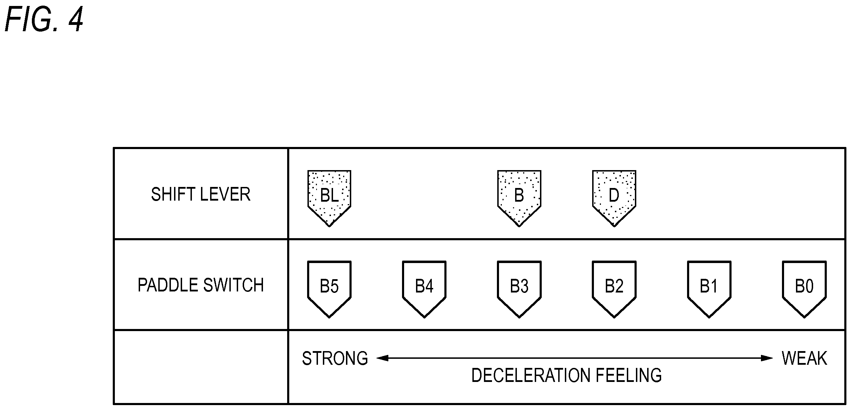

Fig. 4 is a conceptual view showing the regenerative braking force which can be set by the paddle switch 122 and the shift lever 124.

For example, six regeneration levels B0 to B5 can be set in accordance with the magnitude of the regenerative braking force of the motor 22. That is, "selection stages" in Claims correspond to the regeneration levels shown in Fig. 4. The regenerative braking force is relatively stronger from B0 toward B5, and a driver's deceleration feeling or an amount of regeneratively generated power (regenerative torque) increases.

The regeneration levels which can be selected by the shift lever 124 are constituted by shift stages D, B, and BL. The shift stage D can be selected when the shift lever 124 is operated to the D position. The regeneration level of the shift stage D corresponds to B2. When the shift lever 124 is operated once from the D position to the B position to shift the regeneration level to the shift stage B, the shift stage B is set at B3 stronger in regenerative braking force than the shift stage D. When the shift lever 124 is operated one more time to the B position to shift the regeneration level to the shift stage BL, the shift stage BL is set at B5 stronger in regenerative braking force than the shift stage B. Incidentally, when the shift lever 124 in the state of the shift stage BL is operated one further time to the B position, the regeneration level shifts to the shift stage D.

In addition, the regeneration levels which can be selected by the paddle switch 122 are B0, B1, B2, B3, B4 and B5, and can be shifted from one to another in accordance with the number of times of operation on the plus switch 122A and the minus switch 122B. Incidentally, when the electric motor vehicle is started up, the regeneration level is initialized at a default stage which will be described later.

The paddle switch 122 has a larger number of shift stages than the shift lever 124, and is set to be operated a larger number of times for setting a predetermined regeneration level. With this configuration, the paddle switch 122 is suitable for fine control of the regenerative braking force.

Return to description about Fig. 1. The default operation unit 14 accepts an operation for changing the magnitude of the regenerative braking force of the motor 22 (electric motor) to a selection stage which has been currently set as the default stage.

Here, the default stage is set as a reference for the selection stages (regeneration levels) which can be selected by the aforementioned regeneration operation unit 12.

The default stage is determined by a default stage changing unit 306 in accordance with a driver's operation state on the regeneration operation unit 12 (selection frequencies of the respective selection stages). The default stage changing unit 306 will be described later.

Incidentally, in the initialized state of the electric motor vehicle such as at the time of delivery of the vehicle, the default stage is set, for example, at B2.

For example, the default operation unit 14 is mounted as a button etc. provided in the steering wheel 13 or in the periphery of the instrument panel.

When the CPU of the ECU 30 executes the control program, the ECU 30 can implement a detection unit 302, a regeneration control unit 304 and the default stage changing unit 306.

The detection unit 302 detects operation states on the regeneration operation unit 12 and the default operation unit 14 respectively. Incidentally, in the embodiment, the detection unit 302 always detects the operation states on the regeneration operation unit 12 and the default operation unit 14, and provides detection results to the regeneration control unit 304. As to processing in the default stage changing unit 306, it will be sufficient if the operation state on the regeneration operation unit 12 is detected at least during a predetermined learning period which will be described later.

The regeneration control unit 304 sets the magnitude of the regenerative braking force of the motor 22 based on an operation on the regeneration operation unit 12 or an operation on the default operation unit 14.

For example, assume that the current regeneration level (selection stage) is B2 and the default stage is B5. When the plus switch 122A is operated once in this case, the regeneration level is changed to B3. On the other hand, when the minus switch 122B is operated once in this case, the regeneration level is changed to B1. Further, when the default operation unit 14 is operated in this case, the regeneration level is changed to B5.

For example, in the case where the current regeneration level (selection stage) is B2, the minus switch 122B has to be operated three times to change the regeneration level to B5 when the regeneration operation unit 12 is used, but the regeneration level can be changed to B5 in a single operation when the default operation unit 14 is used.

Accordingly, when the default operation unit 14 is used, the driver can rapidly change the regenerative braking force to the magnitude preferred by the driver.

When, for example, a selection stage whose selection frequency is highest during a learning period (hereinafter referred to as "most frequent selection stage") is different from one of the selection stages which is currently set as the default stage, the default stage changing unit 306 changes the default stage to another selection stage.

Here, the learning period is a period in which, for example, the accelerator opening degree of the electric motor vehicle is equal to or lower than a predetermined value. That is, the period in which the accelerator opening degree of the electric motor vehicle is equal to or lower than the predetermined value is a period in which the vehicle is performing inertia traveling or deceleration, i.e. a period in which there is a possibility that regeneration is being performed by the motor 22. The detection unit 302 monitors a value detected by the accelerator opening degree sensor 26 to determine whether it is a learning period or not.

The default stage changing unit 306 accumulates the time in which each selection stage had been selected during the learning period, and sets a selection stage whose accumulated time is longest as the most frequent selection stage.

For example, assume that the selection stage which is currently set as the default stage is the regeneration level B2. In this case, when the most frequent selection stage during the learning period is not B2, the default stage changing unit 306 changes the default stage to another selection stage.

In this case, the default stage changing unit 306 changes the default stage to another selection stage, for example, by one of the following two methods.

### <Method 1>

The most frequent selection stage during the learning period is set as the default stage.

When, for example, the current default stage is B2 and the most frequent selection stage is B5, the default stage is changed to B5 in this method.

### <Method 2>

The default stage is changed to a selection stage which is closer to the most frequent selection stage than the selection stage set as the current default stage.

When, for example, the current default stage is B2 and the most frequent selection stage is B5, i.e. when the driver desires to make the regenerative braking force larger than the current default stage, the default stage is changed to a selection stage closer to B5 than B2, i.e. changed to B3 or B4 larger in regenerative braking force than B2 in this method.

In the case of the method 2, which selection stage to which the default stage should be changed from the selection stage which has been set as the current default stage is determined in advance.

Incidentally, even in the case where the method 2 is used, the most frequent selection stage is set as the default stage when the selection stage set as the current default stage and the most frequent selection stage are adjacent to each other (for example, the current default stage is B3 and the most frequent selection stage is B4).

In addition, reflection timings of learning results by the default stage changing unit 306, i.e. unit learning periods can be set, for example, in the following manner.

### <Period 1>

Each period between a time when the electric motor vehicle starts traveling from a stop state and a time when the electric motor vehicle stops again is set as a unit learning period.

For example, a method is used to set periods between start of the electric motor vehicle to stop of the electric motor vehicle as unit learning periods as follows. That is, a period between a time when the electric motor vehicle is started up to start (start) traveling and a time when the electric motor vehicle stops at a first signal is set as a first unit learning period, and a period between a time when the first signal turns to green and the electric motor vehicle starts and a time when the electric motor vehicle stops at a second signal is set as a second unit learning period.

In this case, each of learning results is reflected, i.e. the default stage is changed, for example, when the electric motor vehicle starts traveling next time.

According to this method, the driver's operation state on the regeneration operation unit 12 can be reflected on the default stage rapidly.

### <Period 2>

A period from start-up to termination of the main system of the electric motor vehicle is regarded as a unit learning period.

For example, this method is used to set a period in which the start-up switch 20 of the electric motor vehicle is pushed to start up the main system, the electric motor vehicle then starts traveling and arrives at a destination point, and the start-up switch 20 is pushed again to terminate the main system, as the unit learning period.

In this case, the default stage is changed, for example, when the main system is started up next time.

According to this method, a driver's long-term driving tendency which is not caused by short-term factors such as traffic conditions and road conditions can be reflected on the default stage.

In addition thereto, for example, the unit learning period may be divided by a time unit, or most frequent selection stages in latest unit learning periods may be statistically processed (to obtain a mean, a mode, a median, etc.) in order to determine a default stage after change.

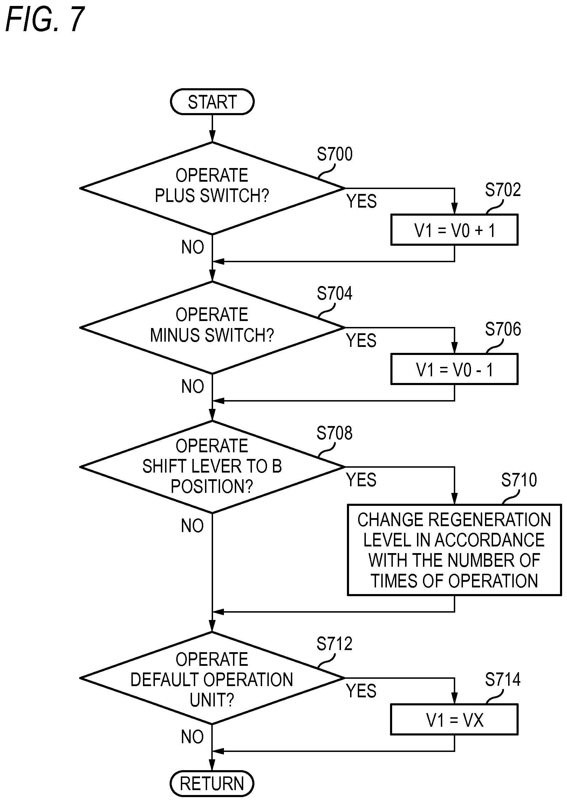

Fig. 7 is a flow chart showing a regenerative braking force changing process performed by the regeneration control unit 304.

The process of Fig. 7 is always performed during the start-up of the electric motor vehicle. Incidentally, a currently selected regeneration level (selection stage) is regarded as V0; a regeneration level (selection stage) after change, V1; and a default stage, VX.

When the plus switch 122A is operated (Step S700: Yes), the regeneration control unit 304 changes the regeneration level of the motor 22 to the current regeneration level+1 (Step S702). That is, V1 is set to be equal to V0+1. In addition, when the minus switch 122B is operated (Step S704: Yes), the regeneration control unit 304 changes the regeneration level of the motor 22 to the current regeneration level-1 (Step S706). That is, V1 is set to equal to V0-1.

In addition, when the shift lever 124 is operated to the B position (Step S708: Yes), the regeneration control unit 304 changes the regeneration level of the motor 22 to B3 (in a first time), B5 (in a second time), or B2 (in a third time) sequentially in accordance with the number of times of operation on the shift lever 124 (Step S710).

In addition, when the default operation unit 14 is operated (Step S712: Yes), the regeneration control unit 304 changes the regeneration level of the motor 22 to the default stage (Step S714). That is, V1 is set to be equal to VX.

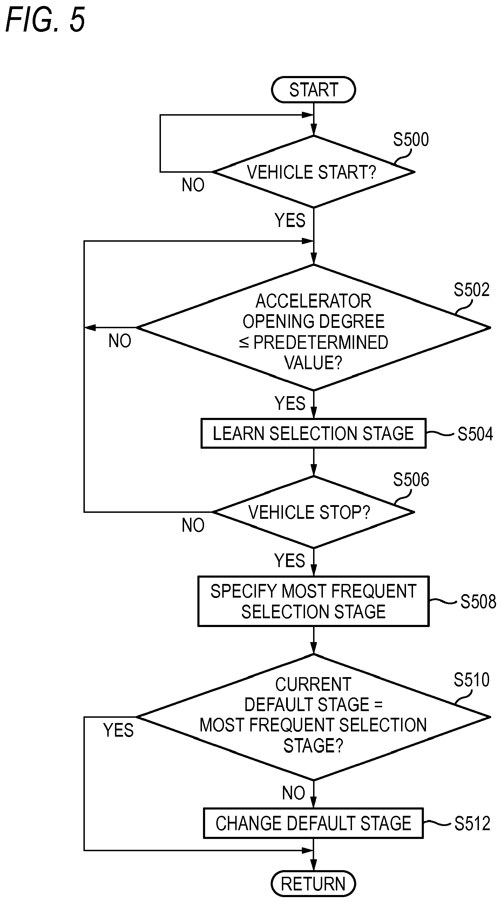

Fig. 5 is a flow chart showing a default stage changing process performed by the default stage changing unit 306.

The process of Fig. 5 is always performed in parallel with the process of Fig. 7 during the start-up of the electric motor vehicle. In addition, a unit learning period in Fig. 5 is set as the aforementioned period 1 (from start to stop of the vehicle).

When the electric motor vehicle starts (Step S500: Yes), the default stage changing unit 306 refers to a value detected by the accelerator opening degree sensor 16 to determine whether the accelerator opening degree is equal to or lower than a predetermined value or not (Step S502). When the accelerator opening degree is neither equal to nor lower than the predetermined value, the default stage changing unit 306 does not perform learning but allows the electric motor vehicle to continue traveling as it is (loop of Step S502: No).

On the other hand, when the accelerator opening degree is equal to or lower than the predetermined value (Step S502: Yes), the default stage changing unit 306 starts learning a selection stage which is currently selected by the regeneration operation unit 12 (Step S504). That is, the default stage changing unit 306 records an operation state (the currently selected regeneration level (selection stage)) on the regeneration operation unit 12 detected by the detection unit 302 and a duration of the operation state.

Unless the electric motor vehicle stops (Step S506: No), the default stage changing unit 306 returns to Step S502 to thereby repeat the processing in and after Step S502.

When the electric motor vehicle stops (Step S506: Yes), the unit learning period ends.

The default stage changing unit 306 specifies a selection stage whose selection frequency is highest during the learning period, i.e. a regeneration level (selection stage) which is selected the longest time, as the most frequent selection stage (Step S508).

The default stage changing unit 306 determines whether the current default stage is one and the same selection stage as the most frequent selection stage or not (Step S510). When the current default stage is one and the same selection stage as the most frequent selection stage (Step S510: Yes), the default stage changing unit 306 does not change the default stage but directly returns to Step S500 to thereby repeat the processing in and after Step S500.

In addition, when the current default stage is different from the most frequent selection stage (Step S510: No), the default stage changing unit 306 changes the default stage (Step S512). When, for example, the aforementioned method 1 is used, the default stage changing unit 306 changes the default stage to the most frequent selection stage. When the aforementioned method 2 is used, the default stage changing unit 306 changes the default stage to a selection stage closer to the most frequent selection stage than the selection stage which has been set as the current default stage.

Then, the default stage changing unit 306 returns to Step S500 to thereby repeat the processing in and after Step S500.

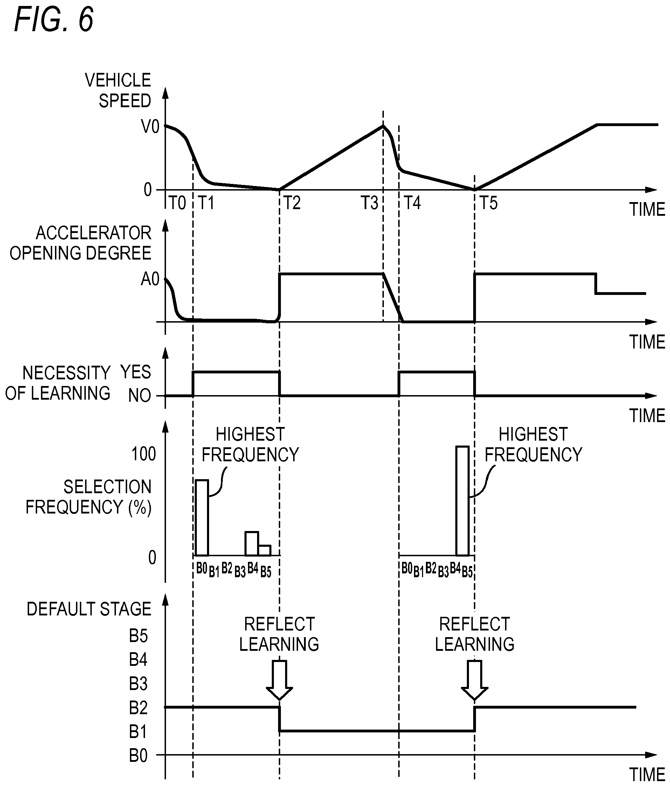

Fig. 6 is a timing chart showing a specific example of the processing performed by the default stage changing unit 306.

Also in Fig. 5, the unit learning period is set as the predetermined period 1 (from start to stop of the vehicle). In addition, the aforementioned method 2 (for changing the default stage to a selection stage closer to the most frequent selection stage than the current default stage) is used as the method for changing the default stage.

Fig. 6 shows the vehicle speed, the accelerator opening degree, necessity of learning, selection frequencies of the respective selection stages in each learning period, and the default stage in the named order from top.

At an initial time instant T0, the vehicle speed is V0, the accelerator opening degree is A0, the necessity of learning is No, and the default stage is B2.

When the driver releases the accelerator pedal in and after the initial time instant T0, the accelerator opening degree becomes equal to or lower than a predetermined value at a time instant T1, and the first learning period is started simultaneously with the time instant T1 (learning: Yes).

After the time instant T0, the vehicle speed decreases in accordance with the release of the accelerator pedal. At a time instant T2, the vehicle stops (vehicle speed zero) . When the vehicle stops, the first learning period ends (learning: No). A most frequent selection stage in the learning period this time is specified.

In the example of Fig. 6, among the regeneration levels B0 to B5, B0 is the most frequent selection stage in the first learning period. In this case, since the current default stage is B2, the current default stage and the most frequent selection stage are different from each other. Accordingly, the default stage changing unit 306 changes the default stage.

Specifically, the default stage is changed to B1 which is a selection stage closer to the most frequent selection stage (B0) than the current default stage (B2).

When the accelerator pedal is then stepped on, the accelerator opening degree increases and the vehicle speed also increases. In and after a time instant T3, the accelerator pedal is released again. At a time instant T4, the accelerator opening degree becomes equal to or lower than the predetermined value. A second learning period is started simultaneously with the time instant T4 (learning: Yes).

In addition, the vehicle speed decreases in accordance with the release of the accelerator pedal. At a time instant T5, the vehicle stops (vehicle speed zero). When the vehicle stops, the second learning period ends (learning: No). A most frequent selection stage in the learning period this time is specified.

In the example of Fig. 6, among the regeneration levels B0 to B5, B5 is the most frequent selection stage in the second learning period. In this case, since the current default stage is B1, the current default stage and the most frequent selection stage are different from each other. Accordingly, the default stage changing unit 306 changes the default stage.

Specifically, the default stage is changed to B2 which is a selection stage closer to the most frequent selection stage (B5) than the current default stage (B1).

Incidentally, when the current default stage and the most frequent selection stage are largely different from each other as in the second learning period, the default stage may be changed to a selection stage which is a plurality of selection stages closer to the most frequent selection stage from the current default stage.

As described above, when a selection stage whose selection frequency is highest in a learning period is different from a selection stage which has been set as the current default stage, the regeneration control apparatus 10 according to the embodiment changes the default stage to another selection stage. Accordingly, the default stage can be set in accordance with the situation of driver's selection from the selection stages. Thus, the regeneration control apparatus 10 is advantageous in terms of improving user-friendliness of the default operation unit 14.

In addition, the regeneration control apparatus 10 may be configured to change the default stage to a selection stage whose selection frequency is highest during a learning period (the aforementioned method 1). With the configuration, a selection stage expected to be preferred by the driver can be selected by a smaller number of times of operation.

In addition, the regeneration control apparatus 10 may be configured to change the default stage to a selection stage closer to the selection stage whose selection frequency is highest than the selection stage which has been set as the current default stage (the aforementioned method 2). With the configuration, the regeneration control apparatus 10 is advantageous in terms of preventing a driving feeling from being deteriorated by a sudden fluctuation in the default stage.

In addition, the regeneration control apparatus 10 carries out learning during deceleration in which regeneration is being performed by the motor 22. Accordingly, the regeneration control apparatus 10 is advantageous in terms of learning a selection stage preferred by the driver more accurately.

In addition, the regeneration control apparatus 10 may be configured to set a period between the time when the electric motor vehicle starts traveling from a stop state and the time when the electric motor vehicle stops again as a unit learning period (the aforementioned period 1). With the configuration, the regeneration control apparatus 10 is advantageous in terms of changing the default stage while finely reflecting road conditions or traffic conditions timely.

In addition, the regeneration control apparatus 10 may be configured to set a period from start-up to termination of the main system of the electric motor vehicle as the unit learning period (the aforementioned period 2). With the configuration, the regeneration control apparatus 10 is advantageous in terms of changing the default stage in conformity with a driver's long-term driving tendency.

According to an aspect of the invention, there is provided a regeneration control apparatus which is configured to control a regenerative braking force of an electric motor which is configured to drive an electric motor vehicle, the regeneration control apparatus comprising: a regeneration operation unit which is adapted to be operated by a driver to select magnitude of the regenerative braking force stepwise from selection stages; a default operation unit which is adapted to be operated by the driver to change the magnitude of the regenerative braking force to one of the selection stages which has been set as a default stage; a detection unit which is configured to detect an operation state on the regeneration operation unit during a learning period; and a default stage changing unit which, when one of the selection stages whose selection frequency is highest during the learning period is different from one of the selection stages which has been currently set as the default stage, is configured to change the default stage to another selection stage.

According to the above configuration, when the selection stage whose selection frequency is highest during the learning period is different from the selection stage which has been currently set as the default stage, the default stage is changed to another selection stage. Accordingly, the default stage can be set in accordance with the situation of driver's selection from the selection stages. Therefore, this configuration is advantageous in terms of improving user-friendliness of the default operation unit.

The default stage changing unit may be configured to change the default stage to the one of the selection stages whose selection frequency is highest during the learning period.

In the above configuration, the default stage is changed to the selection stage whose selection frequency is highest during the learning period. Accordingly, a selection stage which is expected to be preferred by a driver can be selected by a smaller number of times of operation.

The default stage changing unit may be configured to change the default stage to one of the selection stages which is closer to the one of the selection stages whose selection frequency is highest during the learning period than the one of the selection stages which has been currently set as the default stage.

In the above configuration, the default stage can be changed to the selection stage closer to the selection stage whose selection frequency is highest than the selection stage which has been currently set as the default stage. Accordingly, this configuration is advantageous in terms of preventing a driving feeling from being deteriorated by a sudden fluctuation in the default stage.

The detection unit may be configured to set a period in which an accelerator opening degree of the electric motor vehicle is equal to or lower than a predetermined value, as the learning period.

In the above configuration, learning is carried out during deceleration in which regeneration is being performed by the electric motor. Accordingly, this configuration is advantageous in terms of more accurately learning a selection stage preferred by the driver.

The default stage changing unit may be configured to set a period between a time when the electric motor vehicle starts traveling from a stop state and a time when the electric motor vehicle stops again, as a unit learning period, and may be configured to change the default stage when the electric motor vehicle starts traveling next time.

In the above configuration, the period between the time when the electric motor vehicle starts traveling from a stop state and the time when the electric motor vehicle stops again is set as the unit learning period. Accordingly, this configuration is advantageous in terms of changing the default stage while finely reflecting road conditions or traffic conditions timely.

The default stage changing unit may be configured to set a period from start-up to termination of a main system of the electric motor vehicle, as a unit learning period, and may be configured to change the default stage when the main system is started up next time.

In the above configuration, the period from the start-up to the termination of the main system of the electric motor vehicle is set as the unit learning period. Accordingly, this configuration is advantageous in terms of changing the default stage in conformity with a driver' s long-term driving tendency.

## Claims

1. A regeneration control apparatus which is configured to control a regenerative braking force of an electric motor which is configured to drive an electric motor vehicle, the regeneration control apparatus comprising:
a regeneration operation unit which is adapted to be operated by a driver to select magnitude of the regenerative braking force stepwise from selection stages;
a default operation unit which is adapted to be operated by the driver to change the magnitude of the regenerative braking force to one of the selection stages which has been set as a default stage;
a detection unit which is configured to detect an operation state on the regeneration operation unit during a learning period; and
a default stage changing unit which, when one of the selection stages whose selection frequency is highest during the learning period is different from one of the selection stages which has been currently set as the default stage, is configured to change the default stage to another selection stage.

2. The regeneration control apparatus according to claim 1, wherein
the default stage changing unit is configured to change the default stage to the one of the selection stages whose selection frequency is highest during the learning period.

3. The regeneration control apparatus according to claim 1, wherein
the default stage changing unit is configured to change the default stage to one of the selection stages which is closer to the one of the selection stages whose selection frequency is highest during the learning period than the one of the selection stages which has been currently set as the default stage.

4. The regeneration control apparatus according to any one of claims 1 to 3, wherein
the detection unit is configured to set a period in which an accelerator opening degree of the electric motor vehicle is equal to or lower than a predetermined value, as the learning period.

5. The regeneration control apparatus according to any one of claims 1 to 4, wherein
the default stage changing unit is configured to set a period between a time when the electric motor vehicle starts traveling from a stop state and a time when the electric motor vehicle stops again, as a unit learning period, and is configured to change the default stage when the electric motor vehicle starts traveling next time.

6. The regeneration control apparatus according to any one of claims 1 to 4, wherein
the default stage changing unit is configured to set a period from start-up to termination of a main system of the electric motor vehicle, as a unit learning period, and is configured to change the default stage when the main system is started up next time.
